# EUROPÄISCHE PATENTSCHRIFT

(11) **EP 1 607 724 B1**
(45) Veröffentlichungstag und Bekanntmachung des Hinweises auf die Patenterteilung: **02.07.2008**
(21) Anmeldenummer: 05005505.2
(22) Anmeldetag: 14.03.2005
(51) Int. Cl.: G01F 11/02, G01F 11/08

(54) **Dosierventil sowie Verwendung einer Vielzahl desselben**
Dosing valve and use of a plurality of such valves
Soupape de dosage et utilisation d'une pluralité de telles soupapes

(30) Priorität: 26.05.2004 DE 102004026350
(43) Veröffentlichungstag der Anmeldung: 21.12.2005
(73) Patentinhaber: Infors AG, 4103 Bottmingen (CH)
(72) Erfinder: Hawrylenko, Alexander, 4103 Bottmingen (CH)
(74) Vertreter: Säger, Manfred

(56) Entgegenhaltungen:
- FR-A- 2 745 376
- US-A- 4 893 738

## Beschreibung

Die Erfindung betrifft ein Dosierventil gemäss dem Oberbegriff des Hauptanspruchs.

Anstatt von Dosierventilen werden beim Stand der Technik für jedes Gefäss je eine Schlauchpumpe verwendet, die in einer Vielzahl von Ausführungsformen bekannt sind. Sie dienen dazu, in einer Vielzahl von verschiedenen abgeschlossenen Gefäßen Kulturen zu züchten, wobei in den verschiedenen Gefässen unterschiedliche Umgebungsparameter, wie Temperatur gehalten und allen Kulturen in vorgebbaren Zeitintervallen eine einstellbare Dosis einer Flüssigkeit, zum Beispiel einer bestimmten Menge einer Nährlösung zugegeben wird.

Zu diesem Zweck wird jedes abgeschlossene Behältnis mittels einer Schlauchleitung über die Ventileingangsleitung an einen Vorratsbehälter angeschlossen. Dasselbe geschieht mit dem elektrischen Anschluss, der an eine elektrische Spannungsquelle angeschlossen wird. Infolge dieser Verbindungsart ergibt sich eine Vielzahl von langen, zu dem Vorratsbehälter zu verlegender Schlauchleitungen. Überdies muß der Vorratsbehälter mit einem Anschlußstück für diese Vielzahl von Schlauchleitungen ausgestattet sein, um diese anschließen zu können. Dasselbe gilt für den elektrischen Anschluss. Die Vielzahl von Schlauchleitungen und elektrischen Anschlussleitungen machen die Vielzahl der abgeschlossenen Gefäße und die gesamte Anordnung unübersichtlich. Auch kann es vorkommen, dass nicht alle Leitungen oder alle Leitungen nicht richtig angeschlossen sind.

Es sind deshalb schon Dosierventile vorgeschlagen worden, bei denen die Anschlüsse in Form der Schlauchleitungen und elektrischen Anschlüsse übersichtlicher ist (EP 0 129 187 A1; WO98/53208 A1).

Ein bekanntes Dosierventil (WO98/53208 A1) weist eine von einem Vorratsbehälter über eine Ventileingangsleitung zuführbare und über eine Dosierleitung dosiert in ein abgeschlossenes Gefäss, zum Beispiel einen Fermenter oder dergleichen abgebbare Flüssigkeit auf, wobei das Dosierventil einen von einer betätigbaren Membran in seinem Volumen veränderbaren Sammelraum aufweist und in diesen eine Ventilausgangsleitung mündet, wobei der Sammelraum bei das Ansaugen bewirkender Vergrößerung seines Volumens mit der Ventileingangsleitung verbunden ist und Flüssigkeit nur über die Ventileingangsleitung ansaugt und in Richtung auf diese bei Verkleinerung seines Volumens bei Bewegung der Membran in die Schaltstellung mittels eines ersten Rückschlagventils sperrt und wobei in dem Sammelraum ein zusammen mit der Membran betätigbarer Dosierkolben mündet; ferner ist erfindungsgemäss die Verwendung einer Vielzahl von Dosierventilen vorgesehen.

Mit dieser bekannten Ausbildung des Dosierventils ist es möglich, dass diese bezüglich ihrer Ventileingangs- und Ventilausgangsleitung hintereinander in Serie angeordnet sind, das heisst, die Ventilausgangsleitung des einen Dosierventils wird mit der Ventileingangsleitung des nachfolgenden Dosierventils verbunden und das hinterste Dosierventil mit seiner Ventilausgangsleitung wieder an den Vorratsbehälter zurückgeführt. Die elektrischen Anschlüsse können individuell und einzeln mit je einer elektrischen Spannungsquelle verbunden werden. Immer wenn ein elektrischer Spannungsimpuls von einer dieser elektrischen Spannungsquellen abgegeben wird, wird die Membran in dem Sammelraum unter Veränderung, bspw. Verkleinerung dessen Volumens von seiner Neutrallage bzw. Ruhestellung in seine Schaltstellung bewegt. Vorzugsweise wird die Membran mittels Federkraft in ihre Neutrallage gedrückt oder ist selbst elastisch als überprägte Tellerfeder ausgebildet, die sich allein in die Neutrallage bewegt. Nach dem elektrischen Spannungsimpuls bewegt sich die Membran von der Schaltstellung in die Neutrallage zurück, wobei über das erste Rückschlagventil in dessen Öffnungsrichtung über die Ventileingangsleitung Flüssigkeit angesaugt wird. Über jene Ventilausgangsleitung, die mit der Ventileingangsleitung des nächsten Dosierventils verbunden ist, kann wegen des dort vorhandenen, in Richtung von dessen Sammelraum weg hin sperrenden ersten Rückschlagventil keine Flüssigkeit angesaugt werden.

Wird also der elektrische Spannungsimpuls an dem elektrischen Anschluss angelegt, so wird die Membran betätigt und aus ihrer Neutrallage in die Schaltstellung bewegt, und zwar im Sinne einer Verkleinerung des Volumens des Sammelraums, was zweierlei bewirkt: zum einen wird nachdem das erste Rückschlagventil in Richtung auf die Ventileingangsleitung hin gesperrt und Flüssigkeit über die Ventilausgangsleitung zum nächsten Dosierventil transportiert; zum anderen wird die Flüssigkeit von dem Dosierkolben in das Innere des abgeschlossenen Gefässes gepresst. Bei der hintereinander geschalteten Kette einer Vielzahl von Dosierventilen wird also bei einem elektrischen Impuls (Absenken der Membran in dem Sammelraum) an eines der Dosierventile die in dessen Sammelraum befindliche Flüssigkeit ein Stück in Richtung auf das letzte Dosierventil hin bzw. den an dieses angeschlossenen Vorratsbehälter hin bewirkt, weil die Membran die Flüssigkeit in dem Sammelraum zusammenpresst und hierbei die Flüssigkeit über den Dosierkolben in das abgeschlossene Gefäss abgegeben; zugleich wird die Flüssigkeit um ein Stück in Richtung auf das letzte Dosierventil der Kette durch die Ventilausgangsleitung weiterbewegt. Nach dem elektrischen Impuls wird die Membran wieder in die Neutrallage bewegt, wobei sich dabei das Volumen des Sammelraums verkleinert und infolgedessen Flüssigkeit über die Ventileingangsleitung in den Sammelraum angesaugt wird.

Erfindungsgemäss ist an dem Dosierkolben ein Absatz und an dem freien, in dem Sammelraum befindlichen Ende der Kolbenstange ein damit kraftschlüssig verbundener Ventilkolben vorgesehen, welcher an seinem freien, in dem Sammelraum befindlichen Ende eine das obere Ende des Dosierkolbens aufnehmende Ausnehmung mit einem den Absatz des Dosierkolbens hintergreifenden Auflager aufweist, mittels der der Dosierkolben indieser Stellung der Neutrallage gehalten wird, in der das offene obere Ende des Befüllkanals des Dosierkolbens einen Abstand zu der Wandung der Ausnehmung auf und ist in dieser Lage der Absatz des Dosierkolbens von dem Auflager des Ventilkolbens hintergriffen, so dass in der Neutrallage Flüssigkeit in den Befüllkanal eintreten kann.

In bevorzugter Ausführungsform der Erfindung weist der Dosierkolben einen axial in seinem Inneren von seiner in dem Sammelraum in der Neutrallage offenen oberen zu dem ebenfalls offenen Ende verlaufenden Befüllkanal auf und mündet dessen unteres Ende in einem Dosierraum, dessen anderes Ende von einem zweiten Rückschlagventil abgeschlossen ist, an das sich die Dosierleitung zu dem abgeschlossenen Gefäss anschließt, und öffnet das zweite Rückschlagventil in Richtung zu der Dosierleitung und schließt in Richtung auf den Dosierraum. Somit ist sichergestellt, dass bei angehobener Membran in dem Sammelraum keinerlei Flüssigkeit aus dem abgeschlossenen Gefäß oder der Dosierleitung in den Sammelraum zurückgesaugt werden kann.

Bei der Bewegung in die Schaltstellung kommt das obere Ende des Dosierkolbens unter Schliessung des oberen Endes des Befüllkanals an der Wandung der Ausnehmung flüssigkeitsdicht zur Anlage. Wenn des weiteren in zweckmässiger Ausgestaltung des erfindungsgemässen Dosierventils der Durchmesser des Befüllkanals im Bereich seines oberen, dem Sammelraum nächst benachbarten Endes nicht größer als sein Durchmesser im Bereich des unteren Endes ist, welches in einem Dosierraum endet, so ergibt sich der weitere Vorteil: die Querschnittsfläche des Befüllkanals im Bereich seines oberen Endes ist kleiner als die sich von dem Befüllkanal an seinem unteren Ende nach außen anschließende kreisringförmige Fläche. Durch diese beiden unterschiedlich großen Flächen ergibt sich eine resultierende, in Richtung auf die Kolbenstange wirkende Kraft, wodurch der Befüllkanal in seinem oberen Ende fest auf die Stirnfläche der Kolbenstange unter Abdichtung des Befüllkanals von der Umgebung des Sammelraumes drückt, so dass während der Betätigung des Dosierkolbens nicht etwa zufällig weitere Flüssigkeit in den Befüllkanal gelangen kann.

Weitere zweckmässige Ausgestaltungen der Erfindung sind in den Unteransprüchen gekennzeichnet.

Ein bevorzugtes Ausführungsbeispiel der Erfindung wird nachfolgend unter Bezugnahme auf die Zeichnung näher erläutert. In dieser zeigt:
- Figur 1: das erfindungsgemässe Dosierventil in seiner Neutrallage, im schematischen Querschnitt;
- Figur 2: das Ventil gemäss Figur 1, in seiner Schaltstellung und
- Figur 3: einen Ventilkolben des Dosierventils, in perspektivischer Darstellung.

Das insgesamt mit 5 bezeichnete Dosierventil weist zu dessen Betätigung einen insgesamt mit 6 bezeichneten elektrischen Anschluss sowie eine Ventileingangsleitung 7 als auch eine Ventilausgangsleitung 8 auf, die in das insgesamt mit 9 bezeichnete Gehäuse des Dosierventils münden. Die Ventileingangsleitung ist mit einem -nicht gezeigten-Vorratsbehälter mit einer Flüssigkeit verbunden. Die Ventilausgangsleitung 8 führt zu einem nächsten weiteren erfindungsgemässen Dosierventil oder -bei einem letzten Ventil einer Reihe hintereinander geschalteter Dosierventile gemäss der Erfindungwieder zurück zu dem -nicht gezeigten-Vorratsbehälter.

Das Dosierventil ist außerdem mit einer insgesamt mit 10 bezeichneten Dosierleitung versehen, die in ein abgeschlossenes -ebenfalls nicht gezeigtes-Gefäss, zum Beispiel einen Fermenter, mündet.

Das Dosierventil 5 ist ferner mit einem in etwa ringraumförmig ausgebildeten Sammelraum 11 versehen, in den die Ventilausgangsleitung 8 mündet. In diesen Sammelraum 11 mündet auch die Ventileingangsleitung 7 und ist mit diesem über eine Durchgangsöffnung 12 verbunden, welche von einem als Scheibe 13 ausgebildeten ersten Rückschlagventil abgedeckt ist, die aufgrund ihrer Schwerkraft auf dem Rand der Durchgangsöffnung 12 abdichtend zur Anlage kommt.

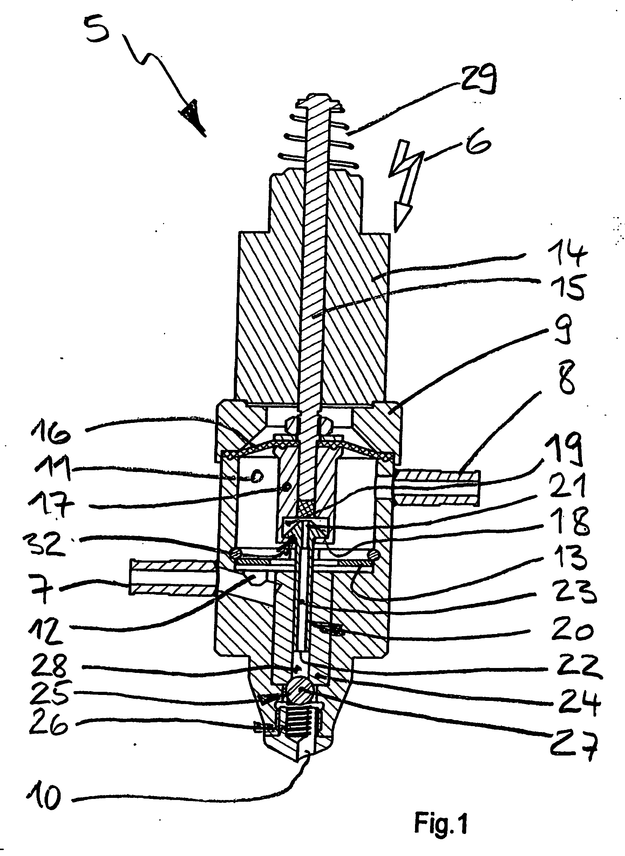

Der elektrische Anschluss 6 des Dosierventils 5 ist an einen insgesamt mit 14 bezeichneten Elektromagneten angeschlossen, dessen von ihm betätigte Kolbenstange 15 kraftschlüssig mit einer beweglichen Membran 16 verbunden ist und sich -in der Zeichnung unterhalb- der Membran 16 weiter verlängert und auf seinem unteren Ende eine ebene Stirnfläche aufweist. Bei Abschalten eines elektrischen Spannungs- oder Stromimpulses wird die Membran 16 von der Kraft einer Rückstellfeder 29 mit der Folge betätigt, dass das Dosierventil in seine Neutrallage (Figur 1) mit einer -in Figur 1 nach oben gewölbten-Membran 16 unter Vergrößerung des Volumens des Sammelraums 11 zurückbewegt wird, wodurch das erste Rückschlagventil in Form der Scheibe 13 von der Durchgangsöffnung 12 abgehoben und Flüssigkeit von der Ventileingangsleitung 7 in den Sammelraum 11 angesaugt wird. Aus der Ventilausgangsleitung 8 kann keine Flüssigkeit in den Sammelraum 11 zurückgesaugt werden, weil an diese Leitung die Ventileingangsleitung des nächsten -in der Zeichnung nicht gezeigten- Dosierventils gemäss der Erfindung angeschlossen ist, welches mit einem eigenen ersten Rückschlagventil versehen ist, das das Ansaugen verhindert. Sollte es sich bei dem nächsten Ventil um das letzte Ventil der Reihe hintereinander geschalteter Dosierventile 5 gemäss der Erfindung handeln, so muß beim letzten, vor dem Vorratsbehälter zurückgeführten Dosierventils an der Ventilausgangsleitung oder dem Vorratsbehälter ein zu diesem hin öffnendes Rückschlagventil vorgesehen werden, um eine korrekte Funktion auch des letzten in der Reihe angeordneten Dosierventils vor dem Vorratsbehälter sicherstellen zu können.

Ferner weist das Dosierventil 5 einen zwischen der Dosierleitung 10 und dem Sammelraum 11 angeordneten Dosierkolben 20 auf, der mit einem von seinem oberen (dem Sammelraum 11 zugewandten) Ende 21 zu seinem unteren Ende 22 verlaufenden Befüllkanal 23 versehen ist. Der Dosierkolben 20 ist an seinem unteren Ende in einer bezüglich des Dosierventils 5 unbeweglich angeordneten Buchse 24 geführt, deren unteres Ende mittels eines zweiten Rückschlagventils 25 abgeschlossen ist, welches in Richtung auf die Dosierleitung 10 hin öffnet und aus einer mittels der Kraft einer Feder 26 auf einen Sitz gepreßten Kugel 27 besteht. Von der Buchse 24, dem zweiten Rückschlagventil 25 und dem Dosierkolben 20 wird der insgesamt mit 28 bezeichnete Dosierraum begrenzt, dessen Volumen bei einer Bewegung des in Figur 1 in seiner Neutrallage gezeigten Dosierkolben unter Herausschieben der dort befindlichen Flüssigkeit über das zweite Rückschlagventil 25 in den Befüllkanal 10 verringerbar ist.

Der Dosierkolben ist mit einem Absatz 32 versehen und an dem freien, in dem Sammelraum 11 befindlichen Ende der Kolbenstange 15 ist ein damit kraftschlüssig verbundener Ventilkolben 17 vorgesehen, welcher an seinem freien Ende eine das obere Ende 21 des Dosierkolbens 20 aufnehmende Ausnehmung 19 mit einem den Absatz 32 des Dosierkolbens 20 hintergreifenden Auflager 18 aufweist. Der Absatz 32 des Dosierkolbens 20 ist an dem oberen Ende 21 des Befüllkanals 23 konisch unter Bildung eines Kegelstumpfes ausgebildet. Das offene obere Ende 21 des Befüllkanals 23 des Dosierkolbens 20 weist in der Neutrallage einen Abstand zu der Wandung der Ausnehmung 19 auf und ist in dieser Lage der Absatz 32 des Dosierkolbens 20 von dem Auflager 18 des Ventilkolbens 17 hintergriffen ist.

Hierbei kommt bei der Bewegung in die Schaltstellung das obere Ende 21 des Dosierkolbens 20 unter Schliessung des oberen Endes 21 des Befüllkanals 23 an der Wandung der Ausnehmung 19 flüssigkeitsdicht zur Anlage.

Wird die Membran 16 des Dosierventils 5 von ihrer nicht gezeigten ebenen neutralen Lage in die erste Schaltstellung gemäss Figur 1 unter Vergrößerung des Volumens des Sammelraums 11 bewegt, so kann infolge des -zu diesem hin- gesperrten zweiten Rückschlagventils 25 aus der Dosierleitung 10 keinerlei Flüssigkeit in den Sammelraum 11 angesaugt werden.

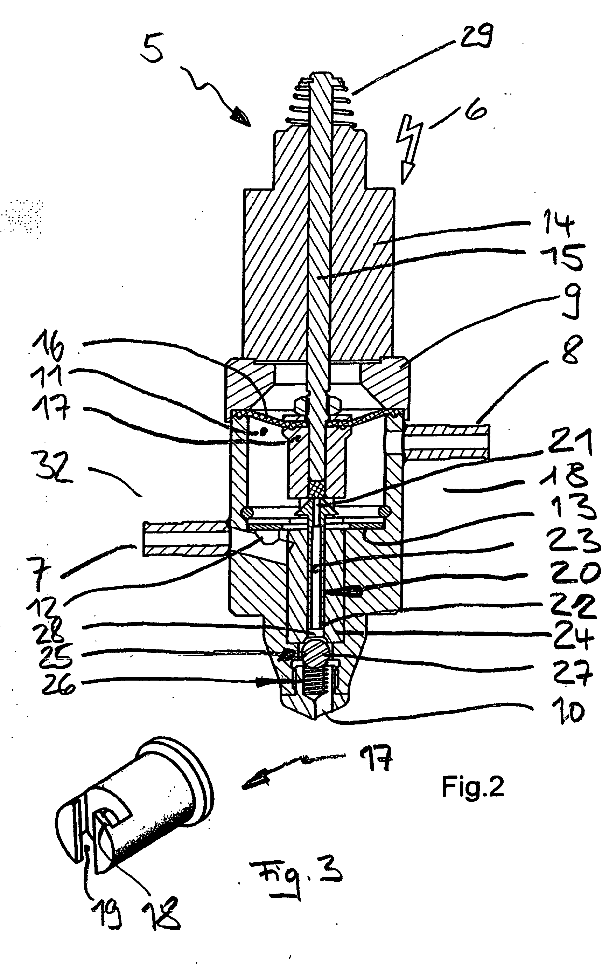

In Figur 2 ist die zweite Schaltstellung des Dosierventils 5 nach dem Einschalten des elektrischen Spannungsimpulses an den elektrischen Anschluss 6 in seiner Schaltstellung dargestellt. Aus Gründen der Vereinfachung sind die Bezugszeichen bis auf einige wenige zum besseren Verständnis weggelassen. Nachdem die beiden Zeichnungen jedoch hinsichtlich ihres Aufbaus identische Teile zeigen, dürften die weggelassenen Bezugszeichen das Verständnis nicht erschweren. In der in Figur 2 gezeigten Schaltstellung ist die von dem Elektromagnet 14 betätigte Kolbenstange 15 (in der Zeichnung nach unten) in Richtung auf den Dosierkolben 20 entgegen der Kraft derRückstellfeder 29 bewegt worden, wodurch die Membran 16 den Sammelraum 11 in seinem Volumen verkleinert. Der hierdurch erzeugte Druck bewirkt, dass das erste Rückschlagventil 13 in Form der auf dem Rand der Durchgangsöffnung 12 nur mittels ihrer Schwerkraft aufliegenden Scheibe 13 durch den bei der Verkleinerung des Volumens des Sammelraums 11 erzeugten Überdruck zusätzlich auf den Rand angedrückt wird und es verhindert, dass im Sammelraum 11 befindliche Flüssigkeit in die Ventileingangsleitung 7 gelangen kann. Zugleich wird durch die Verkleinerung des Volumens des Sammelraums 11 ein Teil der Flüssigkeit in die Ventilausgangsleitung 8 gepresst und zum nächsten -nicht gezeigten- Dosierventil 5 weitertransportiert.

Ferner wird gleichzeitig die sich beiderseits der Membran 16 erstreckende Kolbenstange 15 -in Figur 2 nach unten- in die Schaltstellung bewegt, wobei das obere Ende des Befüllkanals an der ebenen Wandung der Ausnehmung 19 des Ventilkolbens 17 zur Anlage. Bei der weiteren Bewegung wird der Dosierkolben 20 mit verschlossener oberer Öffnung des Befüllkanals 23 -in Figur 2 nach unten- weiter bewegt, wodurch das Volumen des Dosierraums 28 verkleinert wird, weshalb sich das zweite Rückschlagventil 25 öffnet und die aus dem Dosierraum 28 verdrängte Flüssigkeit in die Dosierleitung 10 so lange drückt, bis die Kolbenstange 15 ihre in Figur 2 gezeigte -maximal ausgefahrene- Schaltstellung erreicht hat.

Nachdem die Flüssigkeit aus dem Dosierraum 28 unter Öffnung des zweiten Rückschlagventils 25 in die Dosierleitung 10 abgeflossen ist, schließt sich dieses wieder unter der Kraft seiner Feder 26, wodurch das Volumen des Dosierraums abgeschlossen ist.

Bei der Bewegung in die in Figur 2 gezeigte Stellung der maximal ausgefahrenen Kolbenstange 15 des Elektromagneten 14 kommt die Wandung der Ausnehmung 19 des Ventilkolbens 17 im oberen Bereich 21 des Dosierkolbens 20 des Befüllkanals 23 unter Schliessung dessen oberen Endes 21 zur Anlage und wird entgegen der Bewegungsrichtung der Kolbenstange 15 gedrückt, wodurch der Befüllkanal 23 vom Sammelraum 11 hinreichend zuverlässig abgedichtet ist. Aufgrund dessen, dass der Durchmesser des Befüllkanals im Bereich des oberen Ende höchstens gleich seinem Durchmesser im unteren Bereich so ausgebildet ist, dass die obere Querschnittsfläche des Befüllkanals kleiner bemessen ist, als die die untere Öffnung des Befüllkanals 23 umgebende, planebene Ringfläche ist, ergibt sich infolge der im Befüllkanal und der im Dosierraum 28 angeordneten Flüssigkeit unter gleichem Druck infolge der unterschiedlich großen Flächen in Richtung auf das obere Ende des Dosierkolbens eine resultierende Kraft. Durch diese zusätzliche Maßnahme ist ebenfalls sichergestellt, dass während des Dosierhubs der Befüllkanal 23 vollständig von dem Sammelraum 11 abgedichtet ist.

Wird danach der elektrische Stromimpuls abgeschaltet, wobei sich die Kolbenstange 15 des Elektromagneten 14 von der in Figur 2 gezeigten maximalen Ausfahrstellung in Richtung auf die Neutrallage gemäss Figur 1 zurückbewegt, kommt die obere Öffnung des Befüllkanals 23 des Dosierkolbens 20 frei, wodurch sich dieser aufgrund der Kraft der Rückstellfeder 29 eigenständig -in Figur 2 nach obenin Richtung auf den Sammelraum 11 bewegt, wodurch sich das Volumen des Dosierraums 28 vergrößert und hierbei über den Befüllkanal 23 und die -frei gewordene- obere Öffnung desselben aus dem Sammelraum 11 Flüssigkeit ansaugt, wodurch der Dosierraum 28 wiederum für den nächsten Schaltzyklus vollständig gefüllt ist.

## Patentansprüche

1. Über einen Anschluss (6) betätigbares Dosierventil (5), wobei eine Flüssigkeit von einem Vorratsbehälter über eine Ventileingangsleitung (7) zuführbar und über eine Dosierleitung (10) dosiert in ein abgeschlossenes Gefäss, zum Beispiel einen Fermenter oder dergleichen abgebbar ist, wobei das Dosierventil einen von einer betätigbaren Membran (16) in seinem Volumen veränderbaren Sammelraum (11) aufweist und in diesen eine Ventilausgangsleitung (8) mündet, wobei der Sammelraum bei das Ansaugen bewirkender Vergrößerung seines Volumens mit der Ventileingangsleitung (7) verbunden ist und Flüssigkeit nur über die Ventileingangsleitung ansaugt und in Richtung auf diese bei Verkleinerung seines Volumens bei Bewegung der Membran (16) in die Schaltstellung mittels eines ersten Rückschlagventils (13) sperrt und wobei in dem Sammelraum ein zusammen mit der Membran über eine Kolbenstange (15) sowie einen Ventilkolben (17) betätigbarer, die Flüssigkeit in einen Dosierraum (28) bewegender Dosierkolben (20) mündet, **dadurch gekennzeichnet, dass** der Dosierkolben mit einem Absatz (32) versehen ist, dass an dem freien, in dem Sammelraum (11) befindlichen Ende der Kolbenstange (15) ein damit kraftschlüssig verbundener Ventilkolben (17) vorgesehen ist, und dass dieser an seinem freien Ende eine das obere Ende (21) des Dosierkolbens (20) aufnehmende Ausnehmung (19) mit einem den Absatz (32) des Dosierkolbens (20) hintergreifenden Auflager (18) aufweist.

2. Dosierventil nach Anspruch 1, **dadurch gekennzeichnet, dass** der Dosierkolben (20) einen axial in seinem Inneren von seiner in dem Sammelraum (11) in der Neutrallage offenen von dem oberen (21) zu dem ebenfalls offenen unteren Ende (22) verlaufenden Befüllkanal (23) aufweist, dass das untere Ende des Befüllkanals (23) in einem Dosierraum (28) mündet, dass das andere Ende des Dosierraums (28) von einem zweiten Rückschlagventil (25) abgeschlossen ist, an das sich die Dosierleitung (10) zu dem abgeschlossenen Gefäß anschließt, und dass das zweite Rückschlagventil (25) in Richtung zu der Dosierleitung (10) öffnet und in Richtung auf den Dosierraum (28) schliesst.

3. Dosierventil nach Anspruch 2, **dadurch gekennzeichnet, dass** der Absatz (32) des Dosierkolbens (20) an dem oberen Ende (21) des Befüllkanals (23) konisch unter Bildung eines Kegelstumpfes ausgebildet ist.

4. Dosierventil nach Anspruch 1 oder 3, **dadurch gekennzeichnet, dass** das offene obere Ende (21) des Befüllkanals (23) des Dosierkolbens (20) in der Neutrallage einen Abstand zu der Wandung der Ausnehmung (19) aufweist und dass in dieser Lage der Absatz (32) des Dosierkolbens (20) von dem Auflager (18) des Ventilkolbens (17) hintergriffen ist.

5. Dosierventil nach Anspruch 4, **dadurch gekennzeichnet, dass** das obere Ende (21) des Dosierkolbens (20) in der Schaltstellung unter Schliessung des oberen Endes (21) des Befüllkanals (23) an der Wandung der Ausnehmung (19) flüssigkeitsdicht zur Anlage kommt.

6. Dosierventil nach einem der Ansprüche 1 bis 5, **dadurch gekennzeichnet, dass** der Durchmesser des Befüllkanals (23) im Bereich des oberen Endes (21) kleiner als oder höchstens gleich seinem Durchmesser im Bereich des unteren Endes (22) ist.

7. Dosierventil nach Anspruch 1, **dadurch gekennzeichnet, dass** die Kolbenstange (15) sowohl mit der Membran (16) des Sammelraums (11) als auch mit dem Dosierkolben (20) kraftschlüssig verbunden ist.

8. Dosierventil nach Anspruch 2, **dadurch gekennzeichnet, dass** dass der Dosierkolben (20) im Bereich seines oberen Endes (21) und an seinem unteren Ende (22) in einer bezüglich des Dosierventils (5) unbeweglich angeordneten Buchse (24) geführt ist, wobei der Dosierraum (28) von dieser, dem zweiten Rückschlagventil (25) und dem Dosierkolben (20) begrenzt wird.

9. Dosierventil nach einem der Ansprüche 1 bis 8, **dadurch gekennzeichnet, dass** der Dosierkolben (20) in seiner von der Kolbenstange (15) betätigbaren maximalen Ausfahrlage (Schaltstellung) mit Abstand von dem Rückschlagventil (25) endet.

## Claims

1. Metering valve (5) capable of being activated via a connection (6),
wherein a liquid can be supplied from a storage container via a valve-inlet pipe (7) and released in a metered manner via a metering pipe (10) into an enclosed container, for example, a fermenter or similar;
wherein the metering valve comprises a collecting chamber (11), of which the volume can be varied via an active membrane (16);
wherein a valve-outlet pipe (8) opens in the collecting chamber;
wherein the collecting chamber is connected to the valve-inlet pipe (7) and, when its volume is enlarged thereby creating a vacuum pressure, draws in liquid only via the valve-inlet pipe, and is blocked in the direction towards the valve-inlet pipe by means of a first non-return valve (13) when its volume is reduced by moving the membrane (16) into the switching position; and
wherein a metering piston (20) capable of being activated together with the membrane via a piston rod (15) and a valve piston (17), which moves the liquid into a metering chamber (28), opens in the collecting chamber,
**characterised in that**
the metering piston is provided with a shoulder (32); that a valve piston (17) is provided at the free end disposed in the collecting chamber (11) of the piston rod (15), to which it is connected in a force-fit manner; and
that the valve piston provides a recess (19) at its free end accommodating the upper end (21) of the metering piston (20) with a support (18) engaging behind the shoulder (32) of the metering piston (20).

2. Metering valve according to claim 1,
**characterised in that**
the metering piston (20) provides a filling channel (23) extending axially within its interior from its upper end (21), which is open in the neutral position in the collecting chamber (11), to the similarly open lower end (22);
that the lower end of the filling channel (23) opens in a metering chamber (28);
that the other end of the metering chamber (28) is closed off relative to the enclosed container by a second non-return valve (25), which adjoins the metering pipe (10); and
that the second non-return valve (25) opens in the direction towards the metering pipe (10) and closes in the direction towards the metering chamber (28).

3. Metering valve according to claim 2,
**characterised in that**
the shoulder (32) of the metering piston (20) is formed in a conical manner at the upper end (21) of the filling channel (23) thereby forming a truncated cone.

4. Metering valve according to claim 1 or 3,
**characterised in that**,
in the neutral position, the open upper end (21) of the filling channel (23) of the metering piston (20) provides a distance relative to the wall of the recess (19), and that in this position, the shoulder (32) of the metering piston (20) engages behind by the support (18) of the valve piston (17).

5. Metering valve according to claim 4,
**characterised in that**,
in the switching position, the upper end (21) of the metering piston (20) comes into contact with the wall of the recess (19) in a liquid-tight manner thereby closing the upper end (21) of the filling channel (23).

6. Metering valve according to any one of claims 1 to 5,
**characterised in that**
the diameter of the filling channel (23) in the region of the upper end (21) is smaller than or at most equal to its diameter in the region of the lower end (22).

7. Metering valve according to claim 1,
**characterised in that**
the piston rod (15) is connected in a force-fit manner both to the membrane (16) of the collecting chamber (11) and also to the metering piston (20).

8. Metering valve according to claim 2,
**characterised in that**,
in the region of its upper end (21) and at its lower end (22), the metering piston (20) is guided within a bush (24) disposed in a rigid manner relative to the metering valve (5), wherein the metering chamber (28) is limited by the latter, by the second non-return valve (25) and by the metering piston (20).

9. Metering valve according to any one of claims 1 to 8,
**characterised in that**,
at its maximum extension (switching position) capable of being activated by the piston rod (15), the metering piston (20) ends at a distance from the non-return valve (25).

## Revendications

1. Soupape doseuse (5) pouvant être actionnée par l'intermédiaire d'un raccord (6), moyennant quoi un liquide peut être acheminé à partir d'un réservoir par l'intermédiaire d'une conduite d'admission de soupape (7) et peut sortir en étant dosé par l'intermédiaire d'une conduite de dosage (10), dans un récipient fermé, par exemple un fermenteur ou similaire, moyennant quoi la soupape doseuse présente un espace collecteur (11) dont le volume peut être modifié par un diaphragme (16) qui peut être actionné, et dans lequel débouche une conduite d'évacuation de soupape (8), moyennant quoi l'espace collecteur, lors de l'agrandissement de son volume provoquant l'aspiration, est relié à la conduite d'admission de la soupape (7), et n'aspire le liquide que par l'intermédiaire de la conduite d'admission de soupape et le bloque à l'aide d'un premier clapet antiretour (13), en direction de celle-ci, lors de la réduction de son volume quand le diaphragme (16) passe dans la position de couplage et moyennant quoi, dans l'espace collecteur, débouche un piston doseur (20) pouvant être actionné conjointement avec le diaphragme par l'intermédiaire d'une tige de piston (15) ainsi qu'un piston de soupape (17), qui véhicule le liquide vers un espace de dosage, **caractérisée en ce que** le piston doseur est doté d'un décrochement (32), **en ce que**, au niveau de l'extrémité libre, se trouvant dans l'espace collecteur (11) de la tige de piston (15) est prévu un piston de soupape (17) relié par conjugaison de formes avec celui-ci, et **en ce que** celui-ci présente, au niveau de son extrémité libre, un évidement (19) recevant l'extrémité supérieure (21) du piston doseur (20), avec un support (18) s'engageant par l'arrière dans le décrochement (32) du piston doseur (20).

2. Soupape doseuse selon la revendication 1, **caractérisée en ce que** le piston doseur (20) présente un canal de remplissage (23) s'étendant axialement à l'intérieur à partir de son extrémité supérieure (21), ouverte dans la position neutre jusqu'à l'extrémité inférieure (22), également ouverte dans l'espace collecteur, **en ce que** l'extrémité inférieure du canal de remplissage (23) débouche dans un espace de dosage (28), **en ce que** l'autre extrémité de l'espace de dosage (28) est fermée par un deuxième clapet antiretour (25), auquel est raccordée la conduite de dosage (10) menant au récipient fermé, et **en ce que** le deuxième clapet antiretour (25) s'ouvre en direction de la conduite de dosage (10) et se ferme en direction de l'espace de dosage (28).

3. Soupape doseuse selon la revendication 2, **caractérisée en ce que** le décrochement (32) du piston doseur (20) est configuré de manière conique au niveau de l'extrémité supérieure (21) du canal de remplissage (23), en formant un cône tronqué.

4. Soupape doseuse selon la revendication 1 ou 3, **caractérisée en ce que** l'extrémité supérieure ouverte (21) du canal de remplissage (23) du piston doseur (20) présente un certain écart par rapport à la paroi de l'évidement (19) dans la position neutre, et **en ce que**, dans cette position, le décrochement (32) du piston doseur (20) est engagé par l'arrière par le support (18) du piston de soupape (17).

5. Soupape doseuse selon la revendication 4, **caractérisée en ce que** l'extrémité supérieure (21) du piston doseur (20) vient se positionner contre la paroi de l'évidement (19) de manière étanche aux liquides en fermant l'extrémité supérieure (21) du canal de remplissage (23), dans la position de couplage.

6. Soupape doseuse selon l'une quelconque des revendications 1 à 5, **caractérisée en ce que** le diamètre du canal de remplissage (23), dans la zone de l'extrémité supérieure (21), est inférieur ou tout au plus égal à son diamètre dans la zone de son extrémité inférieure (22).

7. Soupape doseuse selon la revendication 1, **caractérisée en ce que** la tige de piston (15) est reliée par conjugaison de forme aussi bien avec le diaphragme (16) de l'espace collecteur (11) qu'avec le piston doseur (20).

8. Soupape doseuse selon la revendication 2, **caractérisée en ce que** le piston doseur (20), dans la zone de son extrémité supérieure (21), et au niveau de son extrémité inférieure (22), est guidé dans une douille (24) disposée de manière immobile par rapport à la soupape doseuse (5), moyennant quoi l'espace de dosage (28) est délimité par celle-ci, le deuxième clapet antiretour (25) et le piston doseur (20).

9. Soupape doseuse selon l'une quelconque des revendications 1 à 8, **caractérisée en ce que** le piston doseur (20), dans sa position de déploiement maximale pouvant être obtenue par la tige de piston (15) (position de couplage), se termine à une certaine distance du clapet antiretour (25).
